# FASCICULE DE BREVET EUROPEEN

(11) **EP 1 573 665 B1**
(45) Date de publication et mention de la délivrance du brevet: **23.11.2011**
(21) Numéro de dépôt: 03813629.7
(22) Date de dépôt: 17.12.2003
(51) Int. Cl.: G06K 19/073

(54) **DSPOSITIF OPTIMISE DE COMMUNICATION DE DONNEES NUMERIQUES DANS UNE CARTE A MICROCIRCUIT**
OPTIMIERTE EINRICHTUNG ZUR DIGITALEN DATENKOMMUNIKATION IN EINER MIKROSCHALTUNGSKARTE
OPTIMIZED DEVICE FOR DIGITAL DATA COMMUNICATION IN A MICROCIRCUIT CARD

(30) Priorité: 18.12.2002 FR 0216084
(43) Date de publication de la demande: 14.09.2005
(73) Titulaire: OBERTHUR TECHNOLOGIES, 92300 Levallois-Perret (FR)
(72) Inventeur: GOUESSANT, Hervé, F-94400 Vitry Sur Seine (FR); JAYET, Stéphane, F-69330 Meyzieu (FR)
(74) Mandataire: Quantin, Bruno Marie Henri
(86) Numéro de dépôt international: PCT/FR2003/003773
(87) Numéro de publication internationale: WO 2004/057527

(56) Documents cités:
- EP-A- 0 552 079
- DE-A- 19 908 285
- FR-A- 2 783 336
- US-A- 5 787 101

## Description

La présente invention concerne une carte à microcircuit.

Plus précisément, l'invention vise une carte à microcircuit adaptée :
- d'une part à traiter un flux relativement important de données numériques échangées avec un dispositif extérieur à la carte ; et
- d'autre part à mettre en oeuvre des procédures de sécurisation, par exemple des fonctions de vérification de l'intégrité des données numériques échangées avec le dispositif extérieur ou des fonctions cryptographiques d'authentification d'un utilisateur de la carte.

L'invention pourra ainsi être utilisée pour la décompression d'un flux de données numériques cryptées.

Selon une architecture connue d'une telle carte, les données numériques reçues depuis un port d'entrée-sortie de la carte à microcircuit sont lues par un microprocesseur et traitées au fil de leur réception. Le microprocesseur effectue les contrôles de sécurité précités au fur et à mesure qu'il reçoit les données numériques.

Un problème majeur de cette architecture est que le flux de données numériques pouvant être échangées par la carte est limité par la fréquence du microprocesseur (généralement de l'ordre de 4 MHz pour les cartes à microcircuit connues de l'état de la technique).

Dans d'autres domaines de l'électronique, pour palier les limites associées à la fréquence d'un microprocesseur, le transfert de données à hast débit est souvent réalisé par des composants dédiés appelés DMA (Direct Memory Access). Ces composants DMA sont programmés par un microprocesseur pour effectuer un transfert prédéterminé, par exemple entre un port d'entrée-sortie et une mémoire, le transfert en tant que tel n'étant pas réalisé par le microprocesseur.

Malheureusement, ces composants DMA sont dédiés au transfert de données et ne permettent pas d'effectuer de traitement sur les données au cours de leur transfert. Ils ne sont donc pas, a priori, adaptés pour le transfert de données sensibles nécessitant des opérations de sécurisation, comme c'est le cas pour les cartes à microcircuit précitées.

La demande de brevet allemande DE19908285 A1 décrit une carte à puce dont la mémoire est accessible soit par l'intermédiaire du microprocesseur soit directement à travers une interface mémoire. L'accès direct est contrôlé après authentification par le microprocesseur.

L'invention vise, en surmontant cette apparente incompatibilité, à permettre un transfert d'un flux important ou rapide de données sécurisées dans une carte à microcircuit tout en maintenant un niveau de sécurité important, ce grâce à une association originale d'un processeur et d'un DMA. Elle propose à cet effet une carte à microcircuit selon la revendication 1.

Ainsi, les données reçues depuis le port de communication sont transférées par les moyens de transfert vers une zone de mémorisation, le flux de ce transfert n'étant pas limité par la vitesse des moyens de contrôle de flux.

Par ailleurs, au cours de ce transfert, des données de sécurisation obtenues à partir des données numériques sont communiquées par les moyens de traitement aux moyens de contrôle de flux, le flux de ces données de sécurisation reçues par les moyens de contrôle de flux étant limité et de toutes façons bien inférieur au flux de données numériques reçues par la carte.

Les moyens de contrôle de flux, constitués par exemple par un processeur, sont alors à même d'effectuer, en utilisant ces données de sécurisation, les opérations nécessaires de contrôle des moyens de transfert pour garantir le respect des contraintes de sécurité.

L'invention permet ainsi d'augmenter le flux de données numériques traitées par la carte à microcircuit, tout en maintenant le niveau de sécurité d'une carte traditionnelle.

Dans une première variante de réalisation de la carte à microcircuit selon l'invention, les données de sécurisation précitées sont constituées, au moins en partie, par une partie des données numériques transférées par la carte.

Dans un mode préféré de cette première variante de réalisation, les données de sécurisation comportent des données d'authentification d'une partie des données numériques reçues par la carte, les moyens de contrôle de flux étant adaptés à vérifier la validité des données numériques à partir de ces données d'authentification, et à contrôler le transfert en fonction du résultat de cette vérification.

De façon connue, lorsque la carte reçoit des données numériques transmises par un dispositif extérieur, si les moyens de contrôle de flux déterminent que les données d'authentification ne sont pas valides, cela signifie que les données numériques n'ont pas été envoyées par un émetteur autorisé.

Dans ce cas, les moyens de contrôle de flux peuvent prendre une mesure prédéterminée, telle que bloquer l'utilisation de la carte ou envoyer un message d'erreur.

Dans un mode préféré de réalisation, afin de garantir une utilisation sécurisée de la carte, les moyens de contrôle de flux commandent l'arrêt du transfert des données numériques par les moyens de transfert lorsque les données d'authentification ne sont pas valides.

La carte peut ainsi recevoir un flux important de données, une partie seulement de ces données étant communiquée aux moyens de contrôle de flux pour garantir la sécurité exigée.

Dans une deuxième variante de réalisation, les moyens de traitement sont adaptés à insérer dans les données de sécurisation un résultat de traitement calculé à partir des données numériques.

Le résultat de traitement peut par exemple être le résultat d'une étape de vérification des données d'authentification précitées par des moyens de calcul compris dans les moyens de traitement, par exemple des moyens cryptographiques de la carte à microcircuit. Ce résultat est ensuite pris en compte par les moyens de contrôle de flux pour vérifier l'intégrité des données numériques et pour contrôler leur transfert par les moyens de transfert en conséquence.

Cette étape d'authentification peut consister à vérifier une signature, par exemple en utilisant une clef cryptographique et une fonction de hachage selon un algorithme du type MD4, MD5 ou SHA-1.

Dans cette variante, ce sont les moyens de contrôle de flux qui effectuent les étapes de vérification des données d'authentification. Ils peuvent ensuite prendre une mesure prédéterminée telle qu'arrêter le transfert des données numériques ou bloquer l'utilisation de la carte, en cas d'utilisation frauduleuse de celle-ci.

Dans un mode de réalisation préféré, les moyens de contrôle de flux effectuent le contrôle du transfert des données numériques en modifiant au moins un paramètre de fonctionnement des moyens de transfert.

Par exemple, ce paramètre de fonctionnement est une adresse de mémorisation des données numériques dans la zone de mémorisation.

Ainsi, lorsque le taux d'occupation d'une première plage de la zone de mémorisation est supérieur à un seuil prédéterminé, les moyens de contrôle de flux peuvent paramétrer les moyens de transfert pour que les données numériques reçues par les moyens de transfert soient mémorisées à cette adresse.

Le paramètre précité peut également être un paramètre permettant de sélectionner le protocole de communication entre les moyens d'entrée-sortie et la zone de mémorisation. Ce protocole de communication peut par exemple être adapté aux transferts de données sécurisées.

Selon différentes variantes de réalisation de la carte à microcircuit selon l'invention, les moyens de traitement comportent une unité de compression des données, une unité de décompression des données, une unité de cryptage des données ou une unité de décryptage des données.

Dans une autre variante de réalisation, les moyens de contrôle de flux sont en outre adaptés à obtenir des données préliminaires directement à partir des moyens d'entrée-sortie, les données préliminaires étant prises en compte par l'unité de contrôle de flux pour autoriser ou refuser le transfert des données numériques par les moyens de transfert.

Dans un mode particulier de cette variante de réalisation, ces données préliminaires comportent des données d'authentification.

Ce mode de réalisation permet d'obtenir un niveau de sécurité supplémentaire, par exemple par le contrôle d'un code d'authentification, préalablement au transfert des données numériques proprement dites. Contrairement aux données de sécurité, ce code d'authentification n'est typiquement vérifié qu'une seule fois en début de session de transfert. Il peut demander plus de temps calcul, et donc mettre en oeuvre un algorithme d'authentification complexe et permettant d'obtenir un niveau de sécurité renforcé.

Dans un autre mode de réalisation préféré, ces données préliminaires comportent une adresse de mémorisation des données numériques qui seront transférées par les moyens de transfert. Dans ce mode de réalisation préféré, ces données préliminaires peuvent en outre comporter des données d'authentification de cette adresse de mémorisation, ceci afin de garantir que l'adresse de mémorisation n'a pas été fournie par un utilisateur non autorisé.

Selon un mode de réalisation particulièrement avantageux, la carte à microcircuit comporte en outre des moyens de régulation adaptés à modifier une fréquence d'horloge appliquée aux moyens de traitement en fonction desdites données de sécurisation.

Cette caractéristique permet ainsi de limiter la consommation électrique de la carte à microcircuit lorsque le transfert de données numériques par les moyens de transfert doit être interrompu.

L'invention sera mieux comprise et d'autres avantages apparaîtront plus clairement à la lumière de la description qui va suivre d'une carte à microcircuit conforme à son principe, donnée uniquement à titre d'exemple et faite en référence aux dessins annexés dans lesquels :
- la figure 1 est un schéma bloc d'une carte à microcircuit conforme à la technique antérieure ;
- la figure 2 est un schéma bloc analogue à la figure 1 illustrant un mode de réalisation possible d'une carte à microcircuit conforme à l'invention ; et
- la figure 3 est un exemple de données de sécurisation conformément à l'invention.

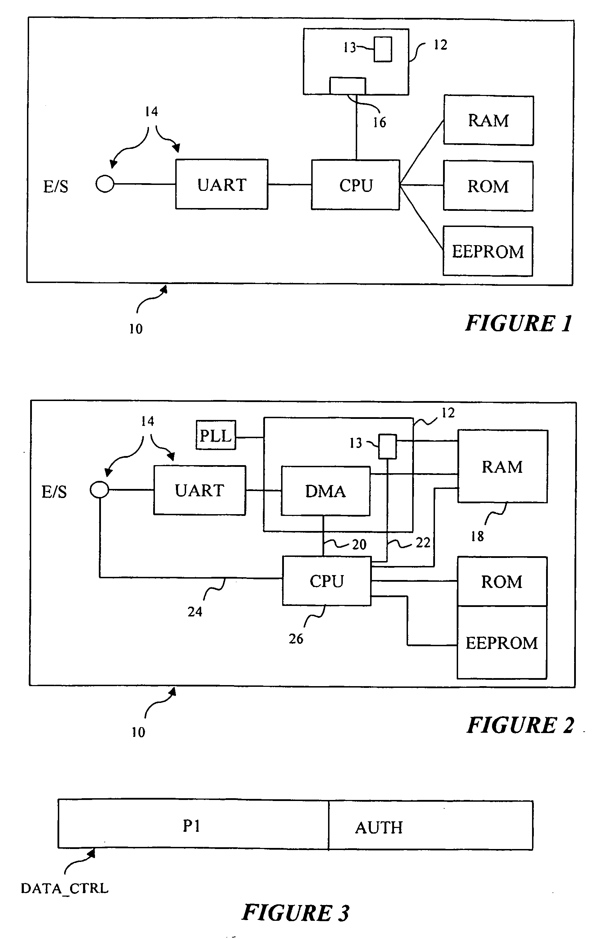

La carte à microcircuit 10 conforme à l'art antérieur représentée sur la figure 1 comporte principalement un processeur CPU associé de façon classique à un certain nombre de mémoires (du type RAM, ROM, EEPROM), des moyens de traitement 12 et des moyens d'entrée-sortie 14 reliés par exemple, à un terminal.

Les moyens de traitement 12 comportent une unité de calcul 13 adaptée à réaliser le traitement proprement dit des données numériques, à savoir par exemple des opérations de compression, de décompression, de cryptage ou de décryptage de ces données.

Dans un mode de réalisation préféré, les moyens d'entrée-sortie 14 permettant à la carte à microcircuit 10 de communiquer avec un terminal ou une entité électronique extérieure, comprennent essentiellement une unité d'émission réception asynchrone de type UART.

Les moyens d'entrée-sortie 14 peuvent aussi être adaptés à mettre en oeuvre des protocoles de communication standardisés et connus de l'homme du métier, à savoir par exemple, les protocoles connus sous les références "T=0", "T=1" (ISO 7816), USB, FireWire ou I2C.

Selon l'art antérieur, lorsque la carte à microcircuit 10 reçoit via l'UART des données numériques qui doivent être soumises à un traitement par l'unité de calcul 13 des moyens de traitement 12, l'UART transmet un message d'interruption au processeur CPU. Le processeur CPU vient alors lire un registre de l'UART et copier les données dans la mémoire RAM.

Le processeur CPU initialise alors les moyens de traitement 12 puis va lire les données à traiter dans la mémoire RAM et les copie dans un registre 16 des moyens de traitement 12.

Afin d'être communiqué au terminal extérieur, le résultat calculé par les moyens de traitement 12 est ensuite lu par le processeur CPU dans le registre 16 et copié dans le registre UART par le processeur CPU.

Un tel mode de fonctionnement n'est pas favorable au traitement de données numériques à haut débit par la carte à microcircuit 10. En effet, l'opération intermédiaire réalisée par le processeur CPU de copie des données numériques dans la zone de mémorisation RAM avant traitement par les moyens de traitement 12 est tout particulièrement pénalisante.

Or, on souhaite augmenter la puissance de traitement d'une telle carte à microcircuit pour traiter des flux importants et continus de données en temps réel.

A titre d'exemple, on souhaite pouvoir procéder au déchiffrement en temps réel de données numériques représentatives d'un son. De telles données sont compressées selon la norme MP3 et transmises à une vitesse de 128 kbits/s. La carte à microcircuit chargée du déchiffrement en temps réel nécessite donc de pouvoir recevoir et traiter des informations à haut débit.

Une carte à microcircuit conforme à l'invention et permettant de résoudre le problème précédent va maintenant être décrite en référence à la figure 2.

Conformément à la présente invention, les moyens de traitement 12 comportent des moyens de transfert DMA des données numériques entre le port de communication 14 et une zone de mémorisation 18.

Dans l'exemple de la figure 2 décrit ici, la zone de mémorisation 18 est une mémoire vive RAM.

Dans d'autres modes de réalisation, la zone de mémorisation 18 peut être choisie parmi différents types de mémoires réinscriptiples, à savoir par exemple, une mémoire Flash, une mémoire de type EEPROM ou un disque dur.

Dans une autre variante de réalisation, la zone de mémorisation 18 est un port de l'unité de calcul 13 des moyens de traitement 12.

Dans le mode de réalisation préféré décrit ici, ces moyens de transfert DMA comportent un composant électronique dédié connu de l'homme du métier appelé DMA (Direct Memory Access).

De façon connue, de tels composants se programment par l'écriture de paramètres dans des registres de configuration.

A titre d'exemple non limitatif, de tels paramètres comportent l'adresse d'un port des moyens d'entrée-sortie 14, l'adresse d'une plage de la zone de mémorisation 18 dans laquelle les données numériques doivent être mémorisées, et des paramètres représentatifs d'un critère d'arrêt du transfert.

Quoiqu'il en soit, la carte à microcircuit selon l'invention comporte en outre des moyens de contrôle de flux 26 adaptés à contrôler le transfert des données numériques par les moyens de transfert DMA.

En particulier, lorsque les données numériques doivent être transférées vers une zone de mémorisation 18 de type EEPROM, les moyens de contrôle de flux 26 sont adaptés à contrôler un générateur de tension ou tout autre moyen permettant d'appliquer une tension électrique suffisante à la mémoire EEPROM pour que celle ci soit accessible en écriture.

Dans le mode de réalisation décrit en référence à la figure 2, les moyens de contrôle de flux 26 sont constitués par un processeur CPU, lequel est classiquement associé à ces différentes mémoires (RAM, ROM, EEPROM) comme dans le cas de la figure 1.

Le paramétrage des moyens de transfert DMA par les moyens de contrôle de flux 26 est représenté schématiquement par les signaux 20 à la figure 2.

Conformément à la présente invention, les moyens de traitement 12 comportent également des moyens de communication 22 entre son unité de calcul 13 et les moyens de contrôle de flux 26.

Ces moyens de communication 22 permettent l'échange de données de sécurisation entre les moyens de traitement 12 et les moyens de contrôle de flux 26, ces données de sécurisation étant obtenues à partir des données numériques DATA transférées par les moyens de transfert DMA.

Chronologiquement, une fois les moyens de transfert DMA programmés par les moyens de contrôle de flux 26 au moyen des signaux 20, les moyens de transfert DMA réalisent le transfert des données numériques entre les moyens d'entrée-sortie 14 et la zone de mémorisation 18. L'unité de calcul 13 des moyens de traitement 12 obtient ensuite les données de sécurisation DATA_CTRL à partir des données numériques DATA mémorisées dans la zone de mémorisation 18 et les communique aux moyens de contrôle de flux 26 par les moyens de communication 22.

Un exemple de données de sécurisation DATA_CTRL, dans un mode préféré de réalisation, est donné à la figure 3.

Les données de sécurisation DATA_CTRL comportent une partie P1 des données numériques et des données d'authentification AUTH calculées à partir des données numériques de la partie P1.

Dans une première variante de réalisation, les données d'authentification AUTH forment une signature de P1. Typiquement, il s'agit des données P1 auxquelles on a appliquées, une fonction de Hachage connue tel que MD4, MD5 ou SHA-1, puis un algorithme de cryptage. Pour cela, on peut utiliser un algorithme de cryptage à clef symétrique tel que l'algorithme DES (Data Encryption Standard) ou un algorithme à clef asymétrique tel que l'algorithme RSA (du nom de ses inventeurs Rivest, Shamir et Adelman).

Dans cette variante, sur réception de ces données de sécurisation DATA_CTRL, les moyens de contrôle de flux 26 décryptent tout d'abord la signature AUTH avec la clef de décryptage et obtiennent un premier résultat HASH1. Les moyens de contrôle de flux 26 appliquent ensuite la fonction de hachage à la partie P1 et obtiennent un deuxième résultat HASH2.

Les moyens de contrôle de flux 26 comparent ensuite le premier résultat HASH1 et deuxième résultat HASH2.

Dans un mode de réalisation préféré de cette première variante, lorsque ces résultats HASH1 et HASH2 diffèrent, les moyens de contrôle de flux 26 commandent l'arrêt du transfert des données numériques par l'envoi d'un signal d'arrêt.

Dans le mode de réalisation préféré, les moyens de traitement 12 insèrent dans les données de sécurisation DATA_CTRL un résultat de traitement des données numériques DATA par l'unité de calcul 13.

Ce résultat de traitement est par exemple l'adresse à laquelle une partie des données numériques DATA a été mémorisée par les moyens de transfert DMA dans la zone de mémorisation 18, les moyens de contrôle de flux 26 étant alors adaptés à lire les données de cette partie, à en vérifier la validité, et à contrôler le transfert des données numériques DATA par les moyens de transfert DMA en fonction du résultat de cette vérification.

Dans un mode de réalisation dans lequel les moyens de traitement 12 comportent des moyens cryptographiques 13, ce résultat de traitement est le résultat, obtenu par l'unité cryptographique 13, d'une étape d'authentification des données numériques DATA.

En variante, le résultat de traitement est le résultat, obtenu par les moyens cryptographiques 13, d'une étape de vérification d'une signature des données numériques DATA.

Cette étape de vérification peut par exemple être le décryptage des données AUTH,ce décryptage étant réalisé en utilisant un algorithme RSA pour obtenir un résultat similaire au premier résultat HASH1.

Dans un mode de réalisation préféré, les moyens de contrôle de flux 26 sont en outre adaptés à obtenir des données préliminaires directement à partir des moyens d'entrée-sortie 14, par le chemin de données 24 représenté à la figure 2.

En variante, les données préliminaires sont obtenues par les moyens de contrôle de flux 26 à partir d'un deuxième port d'entrée-sortie, par exemple en utilisant le protocole connu sous la référence "T=0" (ISO 7816), les moyens d'entrée-sortie 14 étant réservés au transfert des données numériques DATA par les moyens de transfert DMA.

Le chemin de données 24 peut également être un chemin de données bidirectionnel utilisé par les moyens de contrôle de flux 26 pour communiquer des informations à un dispositif extérieur à la carte à microcircuit. Ces informations peuvent par exemple être constituées par un message d'erreur émis par les moyens de contrôle de flux 26 lorsque ceux-ci détectent, à partir des informations de sécurisation, la présence de données numériques erronées.

Ces informations peuvent également être constituées par un flux de données sortant de la carte à microcircuit, ce flux de données étant le résultat du traitement, par les moyens de traitement 12, des données numériques DATA reçues par la carte.

Ces données préliminaires comportent par exemple des données d'authentification PASSWD, ces données préliminaires étant quoi qu'il en soit prises en compte pour contrôler le transfert des données numériques par les moyens de transfert DMA.

Ainsi, par exemple si les données d'authentification PASSWD ne sont pas conformes à une règle de contrôle prédéterminée, cette règle pouvant être mémorisée dans la mémoire ROM, les moyens de contrôle de flux 26 ne programment pas les moyens de transfert DMA pour réaliser le transfert de données numériques entre les moyens d'entrée-sortie 14 et la zone de mémorisation 18.

Préférentiellement, les données préliminaires comportent une adresse de mémorisation des données numériques.

Dans une variante de réalisation, la carte à microcircuit comporte des moyens de régulation PLL adaptés à modifier une fréquence d'horloge appliquée aux moyens de traitement 12 en fonction des données de contrôle DATA_CTRL.

Ces moyens de régulation PLL peuvent par exemple être constitués par un composant de type PLL (Phase Lock Looping en anglais) connu de l'homme du métier et permettant de dériver des signaux de différentes fréquences d'horloge, à partir d'un signal d'une horloge externe non représentée.

Dans le mode préféré de réalisation ces moyens de régulation PLL sont commandés par les moyens de contrôle de flux 26 afin d'ajuster la consommation électrique des moyens de traitement 12 en fonction du flux de données numériques DATA.

Selon le mode de réalisation choisi, les moyens de transfert DMA peuvent être unidirectionnels ou bidirectionnels. L'invention s'applique en particulier pour contrôler le transfert de données numériques cryptées DATA à partir de la zone de mémorisation 18 vers les moyens d'entrée-sortie 14.

## Revendications

1. Carte à microcircuit comportant :
- des moyens d'entrée-sortie (14) aptes à recevoir un flux continu de données numériques (DATA) ;
- des moyens de traitement (12) de ces données ; et
- des moyens de contrôle de flux (26), la carte à microcircuit étant **caractérisée en ce que** les moyens de traitement (12) comportent :
- des moyens de transfert (DMA) dudit flux continu de données numériques (DATA) entre les moyens d'entrée-sortie (14) et une zone de mémorisation (18) ; et
- des moyens de communication (20), avec les moyens de contrôle de flux (26), de données de sécurisation (DATACTRL) obtenues à partir desdites données numériques (DATA),
les moyens de contrôle de flux (26) étant adaptés à contrôler le transfert du flux continu de données numériques (DATA) par les moyens de transfert (DMA) en prenant en compte lesdites données de sécurisation (DATA CTRL).

2. Carte à microcircuit selon la revendication 1, **caractérisée en ce que** lesdites données de sécurisation (DATA_CTRL) sont constituées au moins en partie par une partie desdites données numériques (DATA).

3. Carte à microcircuit selon la revendication 2, **caractérisée en ce que** lesdites données de sécurisation (DATA_CTRL) comportent des données d'authentification (AUTH) d'une partie (P1) des données numériques reçues par la carte, les moyens de contrôle de flux (26) étant adaptés à vérifier la validité desdites données numériques (DATA) à partir de ces données d'authentification (AUTH) et à contrôler ledit transfert en fonction du résultat de cette vérification.

4. Carte à microcircuit selon l'une quelconque des revendications 1 à 3, **caractérisée en ce que** lesdits moyens de traitement (12) sont adaptés à insérer dans lesdites données de sécurisation (DATA_CTRL), un résultat de traitement desdites données numériques (DATA).

5. Carte à microcircuit selon la revendication 4 **caractérisée en ce que** ledit résultat de traitement est le résultat d'une étape d'authentification desdites données numériques.

6. Carte à microcircuit selon l'une quelconque des revendications 1 à 5, **caractérisée en ce que** les moyens de contrôle de flux sont adaptés à modifier au moins un paramètre de fonctionnement desdits moyens de transfert (DMA).

7. Carte à microcircuit selon la revendication 6 **caractérisée en ce que** ledit paramètre est choisi parmi une adresse de ladite zone de mémorisation (18) et un paramètre de sélection d'un protocole de communication entre les moyens d'entrée-sortie (14) et la zone de mémorisation (18).

8. Carte à microcircuit selon l'une quelconque des revendications 1 à 7, **caractérisée en ce que** lesdits moyens de traitement (12) comportent une unité (13) de compression de données, une unité de décompression de données, une unité de cryptage de données, ou une unité de décryptage de données.

9. Carte à microcircuit selon l'une quelconque des revendications 1 à 8, **caractérisée en ce que** lesdits moyens de contrôle de flux (26) sont adaptés à arrêter le transfert des données numériques (DATA) par lesdits moyens de transfert (DMA) lorsqu'ils détectent, à partir desdites données de sécurisation (DATA_CTRL), la présence de données d'authentification invalides parmi lesdites données numériques (DATA).

10. Carte à microcircuit selon l'une quelconque des revendications 1 à 9 **caractérisée en ce que** les moyens de contrôle de flux (26) sont en outre adaptés à obtenir des données préliminaires directement à partir des moyens d'entrée-sortie (14), les données préliminaires étant également prises en compte par les moyens de contrôle de flux (26) pour autoriser ou refuser le transfert des données numériques (DATA) par les moyens de transfert (DMA).

11. Carte à microcircuit selon la revendication 10, **caractérisée en ce que** lesdites données préliminaires comportent des données d'authentification (PASSWD).

12. Carte à microcircuit selon la revendication 10 ou 11, **caractérisée en ce que** lesdites données préliminaires comportent une adresse de mémorisation desdites données numériques.

13. Carte à microcircuit selon l'une quelconque des revendications 1 à 12, **caractérisée en ce qu'**elle comporte en outre des moyens de régulation (PLL) adaptés à modifier une fréquence d'horloge appliquée aux moyens de traitement (12) en fonction desdites données de sécurisation (DATA_CTRL).

14. Carte à microcircuit selon l'une quelconque des revendications 1 à 13, **caractérisée en ce que** lesdits moyens de transfert (DMA) comportent un composant DMA.

## Claims

1. Microcircuit card including:
- input-output means (14) for receiving a continuous stream of digital data (DATA);
- processing means (12) for processing this data; and
- stream control means (26),
the microcircuit card being **characterised in that** the processing means (12) include:
- transfer means (DMA) for transferring said continuous stream of digital data (DATA) between the input-output means (14) and a storage area (18); and
- communication means (20) for communicating with the stream control means (26) security data (DATA_CTRL) obtained from said digital data (DATA),
the stream control means (26) being adapted to control the transfer of the continuous stream of digital data (DATA) by the transfer means (DMA) taking into account said security data (DATA_CTRL).

2. Microcircuit card according to claim 1, **characterized in that** said security data (DATA_CTRL) consists at least in part of a portion of said digital data (DATA).

3. Microcircuit card according to claim 2, **characterized in that** said security data (DATA_CTRL) includes authentication data (AUTH) for authenticating a portion (P1) of the digital data received by the card, the stream control means (26) being adapted to verify the validity of said digital data (DATA) on the basis of this authentication data (AUTH) and to control said transfer as a function of the result of this verification.

4. Microcircuit card according to any one of claims 1 to 3, **characterized in that** said processing means (12) are adapted to insert into said security data (DATA_CTRL) a result of processing said digital data (DATA).

5. Microcircuit card according to claim 4, **characterized in that** said processing result is the result of a step of authenticating said digital data.

6. Microcircuit card according to any one of claims 1 to 5, **characterized in that** the stream control means are adapted to modify at least one operating parameter of said transfer means (DMA).

7. Microcircuit card according to claim 6, **characterized in that** said parameter is selected from an address of said storage area (18) and a parameter for selecting a protocol for communication between the input-output means (14) and the storage area (18).

8. Microcircuit card according to any one of claims 1 to 7, **characterized in that** said processing means (12) include a data compression unit (13), a data decompression unit, a data encryption unit or a data decryption unit.

9. Microcircuit card according to any one of claims 1 to 8, **characterized in that** said stream control means (26) are adapted to stop the transfer of the digital data (DATA) by said transfer means (DMA) if they detect the presence of invalid authentication data in said digital data (DATA) on the basis of said security data (DATA_CTRL).

10. Microcircuit card according to any one of claims 1 to 9, **characterized in that** the stream control means (26) are further adapted to obtain preliminary data directly from the input-output means (14), the stream control means (26) also taking account of the preliminary data in authorising or refusing the transfer of the digital data (DATA) by the transfer means (DMA).

11. Microcircuit card according to claim 10, **characterized in that** said preliminary data includes authentication data (PASSWD).

12. Microcircuit card according to claim 10 or claim 11, **characterized in that** said preliminary data includes a storage address for said digital data.

13. Microcircuit card according to any one of claims 1 to 12, **characterized in that** it further includes regulation means (PLL) adapted to modify a clock frequency applied to the processing means (12) as function of said security data (DATA_CTRL).

14. Microcircuit card according to any one of claims 1 to 13, **characterized in that** said transfer means (DMA) include a DMA component.

## Patentansprüche

1. Mikroschaltungs-Karte, die Folgendes umfasst:
- Eingabe-Ausgabe-Mittel (14) die dazu geeignet sind, einen kontinuierlichen Fluss an digitalen Daten (DATA) zu empfangen;
- Mittel (12) zur Verarbeitung dieser Daten; und
- Mittel (26) zur Flusssteuerung,
wobei die Mikroschaltungskarte **dadurch gekennzeichnet ist, dass** die Verarbeitungsmittel (12) Folgendes umfassen:
- Mittel (DMA) zur Übertragung des genannten kontinuierlichen digitalen Datenflusses (DATA) zwischen den Eingabe-Ausgabe-Mitteln (14) und einem Speicherbereich (18); und
- Mittel zur Kommunikation (20), mit den Flusssteuerungsmitteln (26) von Fälschungssicherungsdaten (DATA_CTRL), die ausgehend von den genannten digitalen Daten (DATA) erhalten werden,
wobei die Flusssteuerungsmittel (26) dazu angepasst werden, die Übertragung des kontinuierlichen digitalen Datenflusses (DATA) durch die Übertragungsmittel (DMA), unter Berücksichtigung der genannten Fälschungssicherungsdaten (DATA_CTRL), zu steuern.

2. Mikroschaltungs-Karte nach Anspruch 1, **dadurch gekennzeichnet, dass** die genannten Fälschungssicherungsdaten (DATA_CTRL) zumindest teilweise aus einem Teil der genannten digitalen Daten (DATA) bestehen.

3. Mikroschaltungs-Karte nach Anspruch 2, **dadurch gekennzeichnet, dass** die genannten Fälschungssicherungsdaten (DATA_CTRL) Authentifizierungsdaten (AUTH) eines Teils (P1) der digitalen Daten umfassen, die von der Karte empfangen werden, wobei die Flusssteuerungsmittel (26) dazu angepasst werden, die Gültigkeit der genannten digitalen Daten (DATA), ausgehend von diesen Authentifizierungsdaten (AUTH), zu überprüfen, und die genannte Übertragung in Abhängigkeit vom Ergebnis dieser Überprüfung zu steuern.

4. Mikroschaltungs-Karte nach einem der Ansprüche von 1 bis 3, **dadurch gekennzeichnet, dass** die genannten Verarbeitungsmittel (12) dazu angepasst sind, in die genannten Fälschungssicherungsdaten (DATA_CTRL) ein Verarbeitungsergebnis der genannten digitalen Daten (DATA) einzufügen.

5. Mikroschaltungs-Karte nach Anspruch 4, **dadurch gekennzeichnet, dass** das genannte Verarbeitungsergebnis das Resultat eines Authentifizierungsschrittes der genannten digitalen Daten (DATA) ist.

6. Mikroschaltungs-Karte nach einem der Ansprüche von 1 bis 5, **dadurch gekennzeichnet, dass** die Flusssteuerungsmittel dazu angepasst sind, mindestens einen Betriebsparameter der genannten Übertragungsmittel (DMA) zu verändern.

7. Mikroschaltungs-Karte nach Anspruch 6, **dadurch gekennzeichnet, dass** der genannte Parameter unter einer Adresse des genannten Speicherbereichs (18) und einem Auswahlparameter eines Kommunikationsprotokolls zwischen den Eingabe-Ausgabe-Mitteln (14) und dem Speicherbereich (18) gewählt wird.

8. Mikroschaltungs-Karte nach einem der Ansprüche von 1 bis 7, **dadurch gekennzeichnet, dass** die genannten Verarbeitungsmittel (12) eine Einheit (13) zur Datenkomprimierung, eine Einheit zur Daten-Dekomprimierung, eine Einheit zur Datenverschlüsselung, oder eine Einheit zur Datenentschlüsselung umfassen.

9. Mikroschaltungs-Karte nach einem der Ansprüche von 1 bis 8, **dadurch gekennzeichnet, dass** die genannten Flusssteuerungsmittel (26) dazu angepasst sind, die Übertragung der digitalen Daten (DATA) durch die genannten Übertragungsmittel (DMA) anzuhalten, wenn diese anhand der genannten Fälschungssicherungsdaten (DATA_CTRL) unter den genannten digitalen Daten (DATA) die Anwesenheit von ungültigen Authentifizierungsdaten feststellen.

10. Mikroschaltungs-Karte nach einem der Ansprüche von 1 bis 9, **dadurch gekennzeichnet, dass** die genannten Flusssteuerungsmittel (26) des Weiteren dazu angepasst sind, vorläufige Daten direkt von den Eingabe-Ausgabe-Mitteln (14) zu erhalten, wobei die vorläufigen Daten ebenfalls von den Flusssteuerungsmitteln (26) berücksichtigt werden, um die Übertragung der digitalen Daten (DATA) durch die Übertragungsmittel (DMA) zu erlauben oder abzulehnen.

11. Mikroschaltungs-Karte nach Anspruch 10, **dadurch gekennzeichnet, dass** die genannten vorläufigen Daten Authentifizierungsdaten (PASSWD) umfassen.

12. Mikroschaltungs-Karte nach Anspruch 10 oder 11, **dadurch gekennzeichnet, dass** die genannten vorläufigen Daten eine Speicheradresse der genannten digitalen Daten umfassen.

13. Mikroschaltungs-Karte nach einem der Ansprüche von 1 bis 12, **dadurch gekennzeichnet, dass** sie des Weiteren Regelungsmittel (PLL) umfasst, die dazu angepasst sind, eine Taktfrequenz zu verändern, die auf die Verarbeitungsmittel (12) in Abhängigkeit von den genannten Fälschungssicherungsdaten (DATA_CTRL) angewendet wird.

14. Mikroschaltungs-Karte nach einem der Ansprüche von 1 bis 13, **dadurch gekennzeichnet, dass** die genannten Übertragungsmittel (DMA) ein DMA-Bauelement umfassen.
